# FASCICULE DE BREVET EUROPEEN

(11) **EP 2 446 149 B1**
(45) Date de publication et mention de la délivrance du brevet: **05.08.2015**
(21) Numéro de dépôt: 10728197.4
(22) Date de dépôt: 23.06.2010
(51) Int. Cl.: F04D 27/02, F04D 29/32, F04D 29/56, F01D 17/16, F01D 17/24, F02C 9/22, F16C 7/06

(54) **DISPOSITIF ET METHODE DE POSITIONNEMENT D'UN EQUIPEMENT A GEOMETRIE VARIABLE POUR UNE TURBOMACHINE, UTILISANT UN VERIN A MESURE RELATIVE**
VORRICHTUNG UND VERFAHREN ZUR POSITIONIERUNG EINER AUSRÜSTUNG MIT VERÄNDERLICHER GEOMETRIE FÜR EINE TURBOMASCHINE MIT EINEM HEBER MIT RELATIVER MESSUNG
DEVICE AND METHOD FOR POSITIONING VARIABLE-GEOMETRY EQUIPMENT FOR A TURBOMACHINE, USING A RELATIVE-MEASUREMENT JACK

(30) Priorité: 26.06.2009 FR 0954376
(43) Date de publication de la demande: 02.05.2012
(73) Titulaire: SNECMA, 75015 Paris (FR)
(72) Inventeur: GAULLY, Bruno, Robert, F-91630 Marolles En Hurepoix (FR); ROBERT, Jean-Albert, Paul, Marc, F-75012 Paris (FR)
(74) Mandataire: Gevers France
(86) Numéro de dépôt international: PCT/EP2010/058953
(87) Numéro de publication internationale: WO 2010/149724

(56) Documents cités:
- EP-A1- 1 188 933
- EP-A1- 1 760 336
- EP-A2- 1 197 637
- EP-A2- 1 988 258

## Description

Le domaine de la présente invention est celui des équipements à géométrie variable et de la commande de leur positionnement, et plus particulièrement celui des équipements à géométrie variable montés sur des turbomachines.

Plusieurs équipements sur une turbomachine peuvent être montés de façon à pouvoir être mobiles, en rotation ou en translation, que ce soit par exemple des aubes de stator à calage variable qui sont orientés plus ou moins dans le sens de la veine d'air d'un compresseur haute pression, des vannes de décharge qui sont ouvertes ou fermées de façon à augmenter, si nécessaire, la marge au pompage d'un compresseur ou bien encore des aubes mobiles d'un compresseur ou d'une hélice à pas variable.

Ces équipements à géométrie variable sont déplacés par des cinématiques actionnées par des vérins ou tout autre actionneur, comme indiqué dans la demande de brevet EP1724472 de la demanderesse, et leur position est définie par une loi établissant une relation entre la course du vérin et la position souhaitée pour l'équipement en question. On connait par ailleurs un dispositif de contrôle de la position de l'équipement à géométrie variable, comme décrit dans la demande EP 1988258, dans laquelle la position de l'équipement est détectée par un capteur en fin de course.

La position est très souvent pilotée par un asservissement qui boucle sur la position désirée. La position de la tige du vérin est connue grâce à un capteur du genre LVDT (pour Linear Variable Displacement Transducer ou capteur à déplacement linéaire variable) qui suit les mouvements de la tige du vérin et les retransmet au dispositif de commande de la position de la cinématique. Ces capteurs sont en général des capteurs du type positionnement en absolu, c'est à dire qu'ils indiquent la position de la tige du vérin par rapport à une référence fixe, liée au corps du vérin ou à l'équipement lui-même.

Cet asservissement boucle généralement sur la position de la tige du vérin et non pas sur celle de l'équipement en question. La course du vérin peut être parfaitement maîtrisée mais correspondre à une position erronée de l'équipement si des jeux apparaissent, par exemple par usure au cours de la vie de la machine, ou bien si une dégradation majeure telle qu'une rupture se produit dans la cinématique placée en aval du vérin.

A titre d'exemple, il est fréquent de rencontrer une usure dans les douilles de maintien des aubes de stator à calage variable (ou VSV, pour Variable Stator Vane) et, par conséquent, de voir apparaître une prise de jeu importante dans leur positionnement et une imprécision dans la commande de cet équipement.

L'imprécision dans le positionnement des systèmes actuels conduit les concepteurs de turbomachines à prévoir des marges dans le dimensionnement de la loi de commande des équipements à géométrie variable. Ils doivent en effet prendre en compte l'écart susceptible d'apparaître au cours de la vie de l'équipement entre sa position réelle et celle que le système de commande lui souhaite voir prendre. Dans le cas particulier d'un équipement d'un compresseur, pour lequel il convient de se protéger en utilisation contre le phénomène de pompage, les marges correspondantes se traduisent par une adaptation du compresseur qui n'est pas optimale, le point de fonctionnement étant choisi plus éloigné de la ligne de pompage qu'il ne devrait, afin de tenir compte des usures à venir et des dérives associées à l'imprécision sur le calage des aubes qui en résulte.

De plus, lors du montage, l'opérateur doit veiller à un positionnement précis de l'équipement pour éviter d'augmenter encore l'imprécision sur le positionnement en opération. Une telle opération est consommatrice de temps et peut engendrer de possibles erreurs de manipulation.

La présente invention a pour but de remédier à ces inconvénients en proposant un dispositif de positionnement d'un équipement à géométrie variable, et son système de commande associé, qui ne reproduise pas certains des défauts des dispositifs existants et, en particulier, qui ne soit pas sensible à un positionnement imprécis de ces équipements. Elle propose également une méthode pour le positionnement du dispositif associé.

A cet effet, l'invention a pour objet un dispositif de commande du positionnement d'un équipement à géométrie variable d'une turbomachine, comportant un calculateur, un actionneur de ladite géométrie variable piloté par le calculateur et une cinématique , ledit actionneur comportant un ensemble mobile muni d'un capteur de mesure de son élongation, ladite cinématique étant reliée à une de ses extrémités à un point d'accrochage dudit ensemble mobile et à l'autre extrémité à un point d'attache de l'équipement, le point d'attache se déplaçant sous l'action de l'actionneur le long d'une course limitée par une butée et la cinématique étant déformable élastiquement sous l'action de l'actionneur lorsque le point d'attache est sur la butée, caractérisé par le fait que la consigne d'élongation fournie par le calculateur audit ensemble mobile est définie comme une différence par rapport à la valeur de l'élongation de l'ensemble mobile qui correspond au contact du point d'attache avec la butée.

En utilisant comme référence la valeur de l'élongation correspondant à la butée on s'affranchit des jeux pouvant exister dans la cinématique et on sait détecter une éventuelle rupture dans la cinématique. On peut ainsi réduire les marges susceptibles de garantir un bon fonctionnement de la turbomachine.

De façon préférentielle le calculateur détecte la valeur de l'élongation de l'ensemble mobile qui correspond au contact du point d'attache avec la butée en réalisant l'envoi à l'actionneur d'au moins une consigne de déplacement de son ensemble mobile au delà de la position correspondant à la mise sur butée du point d'attache.

L'envoi de l'actionneur au-delà de la butée se traduit par une évolution d'au moins une des caractéristiques de fonctionnement du vérin au passage sur cette butée, ce qui permet de détecter l'arrivée réelle sur la butée du point d'attache de la géométrie variable. A partir de la connaissance de la valeur réelle de l'élongation correspondant au contact sur la butée et de celle qui figurait dans la logique de commande, il est possible de recaler la logique de commande et, partant, de réduire la prise de marges lors de la conception de cette logique de commande.

Avantageusement le dispositif comporte en outre un moyen de mesure de l'effort délivré par l'actionneur et ledit calculateur est conformé pour recueillir l'évolution en fonction du temps du couple {élongation de l'ensemble mobile - effort délivré par l'actionneur} lors d'un déplacement de l'ensemble mobile en réponse à une consigne d'envoi dudit ensemble mobile au delà de la position correspondant à la mise sur butée du point d'attache.

Dans un mode particulier de réalisation ledit calculateur est conformé pour détecter un point d'inflexion sur la courbe donnant l'évolution de l'effort délivré par l'actionneur en fonction du temps.

De façon encore plus préférentielle ledit calculateur est conformé pour recaler dans sa logique de commande du positionnement de la cinématique, l'élongation de l'ensemble mobile correspondant au contact du point d'attache avec la butée sur celle correspondant à l'effort délivré par l'actionneur audit point d'inflexion.

On peut ainsi recaler de façon régulière, par exemple lors de chaque utilisation, la logique de commande de l'équipement et réagir dès l'apparition d'une dérive due à une usure ou à une dégradation de la cinématique.

L'invention porte également sur une méthode de commande du positionnement par l'intermédiaire d'une cinématique d'un équipement à géométrie variable d'une turbomachine par l'élongation à donner à un ensemble mobile d'un actionneur, ledit actionneur étant muni d'un capteur de mesure de ladite élongation et d'une mesure de l'effort délivré par l'actionneur, ladite cinématique étant reliée à une de ses extrémités à un point d'accrochage dudit ensemble mobile et à l'autre extrémité à un point d'attache dudit équipement, le point d'attache se déplaçant sous l'action de l'actionneur le long d'une course limitée par une butée et la cinématique étant déformable élastiquement sous l'action de l'actionneur lorsque le point d'attache est sur la butée, comportant les étapes suivantes :
a) envoyer à l'actionneur une consigne de déplacement de son ensemble mobile au-delà de la position correspondant à la mise sur la butée du point d'attache,
b) mesurer la valeur d'au moins un couple {élongation de l'ensemble mobile - effort délivré par l'actionneur} au cours d'un déplacement dudit ensemble mobile,
c) calculer la valeur de l'élongation de l'ensemble mobile qui correspond au contact du point d'attache avec la butée à partir de la mesure de l'effort délivré par l'actionneur et du au moins un couple mesuré.
d) définir l'élongation à donner en utilisation à l'ensemble mobile par son écart par rapport à la valeur calculée ci-dessus.

De façon préférentielle l'étape b) consiste à recueillir l'évolution en fonction du temps du couple {élongation de l'ensemble mobile - effort délivré par l'actionneur} lors du déplacement de l'ensemble mobile consécutif à une consigne d'envoi dudit ensemble mobile au delà de la position correspondant à la mise sur butée du point d'attache et l'étape c) consiste à détecter un point d'inflexion sur la courbe donnant l'évolution de l'effort délivré par l'actionneur en fonction du temps.

L'invention porte enfin sur une turbomachine équipée d'un équipement à géométrie variable dont le positionnement est commandé par un dispositif tel que décrit ci-dessus et sur un calculateur d'une turbomachine dans lequel est implanté un module de calcul implémentant une des méthodes exposées ci-dessus.

L'invention sera mieux comprise, et d'autres buts, détails, caractéristiques et avantages de celle-ci apparaîtront plus clairement au cours de la description explicative détaillée qui va suivre d'un mode de réalisation de l'invention donné à titre d'exemple purement illustratif et non limitatif, en référence aux dessins schématiques annexés.

Sur ces dessins :
- la figure 1 est une vue schématique de la chaîne de commande d'un équipement à géométrie variable selon un mode de réalisation de l'invention ;
- la figure 2 est une vue schématique comparative de la course d'un équipement à géométrie variable et de l'ensemble mobile du vérin qui l'actionne ;
- la figure 3 est une vue donnant, d'une part, la commande de déplacement selon l'invention, adressée à un équipement à géométrie variable et, d'autre part, le déplacement effectivement réalisé par l'équipement en réponse à cette commande ;
- la figure 4 est une vue des efforts appliqués par le vérin de commande d'un équipement à géométrie variable selon l'invention, au cours d'un déplacement tel que celui commandé sur la figure 3.

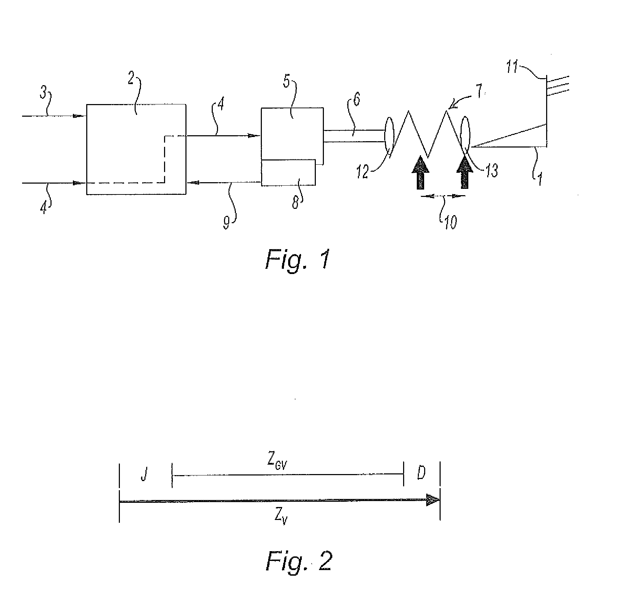

En se référant à la figure 1, on voit une chaîne de commande d'un équipement à géométrie variable 1 comprenant un calculateur 2 qui reçoit, sur une ligne de consigne 3, une consigne pour la position souhaitée de l'équipement 1 et qui agit sur la puissance fournie par une ligne de puissance 4 à un actuateur de type vérin 5. En sortie du calculateur 2 la ligne de puissance 4 actionne le vérin 5 et son ensemble mobile 6, du type tige de vérin, pour modifier, par l'intermédiaire d'une cinématique 7, la position de l'équipement à géométrie variable 1. La tige de vérin 6 est liée à la cinématique au niveau d'un point d'accrochage 12 et la cinématique déplace l'équipement 1 par l'intermédiaire d'un point d'attache 13. Un capteur 8 mesure en permanence la position de la tige de vérin 6 et la transmet au calculateur 2 à l'aide d'une ligne de rebouclage 9. Le calculateur calcule à tout instant l'écart entre la position vue par le capteur 8 et celle qui correspond, pour un fonctionnement nominal de la cinématique 7, à la position souhaitée et il agit en conséquence sur la ligne de puissance 4 pour réduire cet écart et l'amener progressivement vers zéro.

Il convient de noter que la chaîne de commande est ici décrite avec un bouclage d'asservissement sur la position de la tige du vérin, mais que l'invention peut parfaitement être réalisée avec une chaîne directe, ne comportant pas de retour d'asservissement.

Du fait des usures qui apparaissent avec le temps ou bien d'une éventuelle rupture il se produit un jeu 10 dans la cinématique 7 qui génère un écart, dans un sens ou dans l'autre, entre la position réelle de l'équipement 1 et celle qui est demandée par la tige de vérin 6.

Sur la figure 1 est également représentée une butée 11 correspondant à une des positions de fin de course de l'équipement à géométrie variable 1. Des butées de ce type peuvent être, par exemple, les butées sur le carter haute pression pour les anneaux de cinématique des VSV, les butées sur le carter intermédiaire pour les portes des vannes de décharge des compresseurs ou encore les butées maxi et mini pour le pas d'une pale ou d'une hélice. La présence d'au moins une butée sur la course du point d'attache de l'équipement est un élément essentiel pour la réalisation de l'invention.

La figure 2 représente, de façon comparative, le déplacement du point d'accrochage 12 de la tige du vérin 6 sur la cinématique 7 et le déplacement réel du point d'attache 13 de la cinématique sur l'équipement 1, lors d'un actionnement de l'équipement 1 pour le faire passer d'une position sur une de ses butées à une position sur l'autre butée. Alors que la tige du vérin 6 se déplace sur une course Z_{V}, le point d'attache 13 ne se déplace tout d'abord pas, et ce sur l'équivalent d'une course J correspondant au rattrapage du jeu 10. Une fois le jeu 10 de la cinématique rattrapé, l'équipement parcourt sa course efficace Z_{CV}, c'est-à-dire celle allant d'une butée à l'autre. Sur la figure 2 est représentée une course du vérin Z_{V} supérieure à sa course efficace, c'est à dire à celle qui correspondrait, dans des conditions nominales de la cinématique, au déplacement Z_{G} de l'équipement 1 entre ses butées. La course demandée à la tige de vérin 6 étant supérieure à sa course efficace du côté de la butée de fin de course, le vérin 5 appuie en fin de course sur la cinématique 7 qui ne peut plus avancer du fait de la butée 11, et génère alors une déformation mécanique de cette cinématique. Ce faisant le point d'accrochage 12 du vérin continue à progresser d'une longueur D qui correspond à l'élasticité des pièces constituant la cinématique 7.

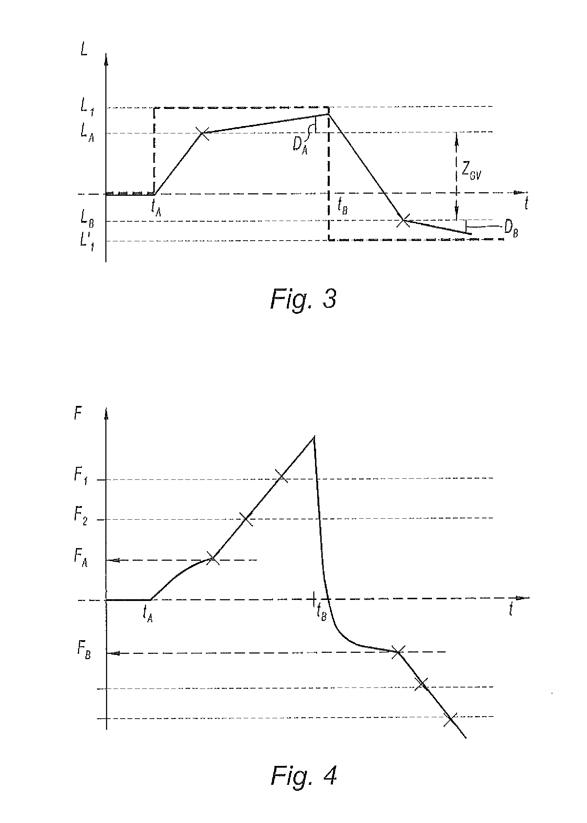

En se référant aux figures 3 et 4 on voit le déplacement L (figure 3) du point d'accrochage 12 de la tige du vérin 6 et l'effort F (figure 4) développé par le vérin 5 au cours d'une commande de déplacement de l'équipement 1 depuis une position donnée de départ vers une première butée 11 de fin de course, référencée A, contre laquelle l'équipement est poussé par le vérin 5 ; ce premier déplacement est suivi d'un second déplacement qui va de cette première butée A vers une seconde butée, référencée B, le vérin 5 agissant cette fois-ci dans le sens inverse au précédent.

Sur la figure 3 sont représentées deux courbes, l'une (tiretée) montrant la position demandée par le calculateur 2 et l'autre (en trait plein) montrant la position réelle du point d'accrochage 12 du vérin lors du déplacement indiqué ci-dessus. La commande est tout d'abord à zéro, c'est à dire qu'aucune action n'est demandée au vérin qui laisse donc le point d'attache 13 dans la position où il se trouvait auparavant. A la suite d'une demande d'évolution de la position de l'équipement 1, reçue par le calculateur sur la ligne de consigne 3, ce dernier transmet au vérin 5, à l'instant t_{A}, un ordre de déplacement du point d'attache 13 vers la première butée A, pour y rester pendant un temps donné t_{B} - t_{A}. Au bout du temps t_{B} le calculateur 2 transmet un ordre de déplacement du point d'attache 13 de la première butée A vers la seconde butée B.

A l'instant t_{A} le point d'accrochage 12 se déplace de sa position initiale vers la butée 11, à la vitesse correspondant à celle du déplacement de la tige de vérin 6 dans le vérin 5. Le point d'attache 13 se déplace d'autant, une fois que le jeu 10 éventuel a été résorbé. Lorsque le point d'attache 13 arrive sur la première butée A, le vérin 5 continue sa course jusqu'au temps t_{B} et le point d'accrochage 12 de sa tige continue sa progression sur une distance D_{A}, du fait de la déformation permise par l'élasticité de la cinématique 7.

A l'instant t_{B} la pression est inversée dans le vérin 5 et le point d'attache 13 est maintenant commandé pour venir sur la seconde butée B. Le point d'attache 13 restant, dans un premier temps, toujours en contact avec la butée A, le point d'accrochage 12 de la tige revient dans une position de relâchement de la contrainte d'appui sur cette butée, en effaçant l'enfoncement D_{A} qui résulte de l'élasticité de la cinématique 7. La tige 6 du vérin continue sa rétractation en rattrapant d'abord le jeu J qui existe éventuellement dans ce sens dans la cinématique puis déplace le point d'attache 13 vers la seconde butée B. De même que précédemment lorsque le point d'attache 13 atteint la seconde butée B, la tige 6 du vérin 5 continue sa course sur une distance D_{B} permise par l'élasticité de la cinématique 7.

Parallèlement la force exercée par le vérin, telle que représentée sur la figure 4, évolue à partir de t_{A} en restant dans un premier temps relativement faible et égale à la valeur nécessaire au déplacement de la cinématique 7 et de l'équipement à géométrie variable 1. Une fois que le point d'attache 13 a atteint la première butée A, la consigne envoyée par le calculateur 2 est de poursuivre l'action du vérin pour atteindre une position au delà de la butée. La force exercée par le vérin augmente alors brutalement, en réaction au contre-effort exercé par la butée. La courbe de la figure 4 montre ainsi une inflexion prononcée à l'instant t_{A}.

A partir du temps t_{B} la force exercée par le vérin décroit brutalement puis s'exerce dans le sens inverse, en direction de la seconde butée B.

On va maintenant décrire un dispositif et une méthode permettant de s'affranchir des problèmes d'usure dans la commande des équipements à géométrie variable d'une turbomachine ainsi que des dérives dans les mesures qui en résultent, et permettant par ailleurs de détecter une éventuelle rupture dans la chaîne de commande de ces équipements.

Il convient de noter que, en général dans l'art antérieur, le capteur 8 est un capteur à mesure absolue qui évalue l'élongation de la tige de vérin 6 à partir d'une référence fixe. Cette référence peut être, par exemple, le corps du vérin, la mesure de l'élongation portant alors sur la longueur de la tige qui fait saillie hors dudit corps. Dans l'invention, a contrario, la mesure en utilisation de l'élongation de la tige du vérin s'effectue par rapport à une position non connue a priori, et qui est définie lors d'une mise sur butée de l'équipement 1.

L'invention propose tout d'abord de placer une, et de préférence deux, butées mécaniques au plus près des géométries variables et ensuite d'aller recaler, de façon régulière en utilisation ou périodiquement au long de la vie du moteur, la position de la tige du vérin 6 en envoyant l'équipement 1 sur une de ces butées.

La méthode consiste à déterminer l'élongation de la tige du vérin 6 qui correspond à la position d'une butée 11 sur laquelle bute le point d'attache 13 de l'équipement à géométrie variable 1, de prendre cette valeur comme référence pour les élongations qui seront demandées au vérin 5 par le calculateur 2 et de définir désormais la consigne de position de la tige du vérin 6 par une différence vis-à-vis de cette valeur de référence.

Cette valeur de référence étant déterminée, la position que prend la tige du vérin 6 devient indépendante des jeux pouvant exister dans la cinématique. On retrouve alors un pilotage parfaitement maîtrisé de la position de l'équipement 1. Il n'est donc plus nécessaire de prendre des marges pour compenser les usures, comme c'était le cas dans l'art antérieur. Il est par ailleurs possible de détecter si une rupture s'est produite dans la chaîne d'entraînement car, dans ce cas l'équipement 1 n'atteindra jamais sa butée et aucune élongation de la tige du vérin ne correspondra à une position de l'équipement sur la butée 11.

Pour connaître la position de la tige du vérin 6 qui correspond au contact de l'équipement 1 avec la butée 11, l'opérateur envoie, par l'intermédiaire de la ligne de consigne 3, une consigne de déploiement sur une position L1, située volontairement au-delà de la butée 11 choisie. Le calculateur 2 connaît pendant le déplacement du vérin, à la fois l'effort F1 transmis par le vérin 5, grâce à la valeur qu'il donne à la ligne de puissance 4, et la position L1 de la tige du vérin 6, par l'intermédiaire du capteur 8. Ce faisant, il est capable de reproduire la courbe figurant sur la figure 4.

Le dépouillement de cette courbe permet de déterminer un point d'inflexion F_{A}, qui correspond à l'élongation LA du vérin pour laquelle l'équipement 1 est sur la butée 11. C'est cette valeur qui est ensuite prise comme référence pour les positionnements ultérieurs de la tige du vérin.

On obtient ainsi un dispositif et une méthode qui permettent de s'affranchir des usures apparaissant dans la cinématique 7 et de détecter d'éventuelles ruptures de cette cinématique.

Bien que l'invention ait été décrite en relation avec un mode de réalisation particulier, il est bien évident qu'elle comprend tous les équivalents techniques des moyens décrits ainsi que leurs combinaisons si celles-ci entrent dans le cadre de l'invention.

## Revendications

1. Dispositif de commande du positionnement d'un équipement à géométrie variable (1) d'une turbomachine, comportant un calculateur (2), un actionneur (5) de ladite géométrie variable piloté par le calculateur (2) et une cinématique (7), ledit actionneur (5) comportant un ensemble mobile (6) muni d'un capteur (8) de mesure de son élongation, ladite cinématique (7) étant reliée à une de ses extrémités à un point d'accrochage (12) dudit ensemble mobile (6) et à l'autre extrémité à un point d'attache (13) de l'équipement (1), le point d'attache (13) se déplaçant sous l'action de l'actionneur (5) le long d'une course limitée par une butée (11) et la cinématique (7) étant déformable élastiquement sous l'action de l'actionneur (5) lorsque le point d'attache (13) est sur la butée (11),
**caractérisé par le fait que** la consigne d'élongation fournie par le calculateur (2) audit ensemble mobile (6) est définie comme une différence par rapport à la valeur de l'élongation de l'ensemble mobile (6) qui correspond au contact du point d'attache (13) avec la butée (11).

2. Dispositif selon la revendication 1 dans lequel le calculateur (2) détecte la valeur de l'élongation de l'ensemble mobile (6) qui correspond au contact du point d'attache (13) avec la butée (11) en réalisant l'envoi à l'actionneur (5) d'au moins une consigne de déplacement de son ensemble mobile (6) au delà de la position correspondant à la mise sur butée du point d'attache (13).

3. Dispositif selon la revendication 2 comportant en outre un moyen de mesure de l'effort délivré par l'actionneur (5), dans lequel ledit calculateur est conformé pour recueillir l'évolution en fonction du temps du couple constitué par l'élongation de l'ensemble mobile (6) et l'effort délivré par l'actionneur (5), lors d'un déplacement de l'ensemble mobile (6) en réponse à une consigne d'envoi dudit ensemble mobile au delà de la position correspondant à la mise sur butée du point d'attache (13).

4. Dispositif selon la revendication 3 dans lequel ledit calculateur est conformé pour détecter un point d'inflexion sur la courbe donnant l'évolution de l'effort délivré par l'actionneur (5) en fonction du temps.

5. Dispositif selon la revendication 4 dans lequel ledit calculateur est conformé pour recaler dans sa logique de commande du positionnement de la cinématique (7), l'élongation de l'ensemble mobile (6) correspondant au contact du point d'attache (13) avec la butée (11) sur celle correspondant à l'effort délivré par l'actionneur (5) audit point d'inflexion.

6. Méthode de commande du positionnement par l'intermédiaire d'une cinématique (7) d'un équipement à géométrie variable (1) d'une turbomachine par l'élongation à donner à un ensemble mobile (6) d'un actionneur (5), ledit actionneur étant muni d'un capteur (8) de mesure de ladite élongation et d'un moyen de mesure de l'effort délivré par l'actionneur (5), ladite cinématique étant reliée à une de ses extrémités à un point d'accrochage (12) dudit ensemble mobile (6) et à l'autre extrémité à un point d'attache (13) dudit équipement (1), le point d'attache (13) se déplaçant sous l'action de l'actionneur (5) le long d'une course limitée par une butée (11) et la cinématique (7) étant déformable élastiquement sous l'action de l'actionneur (5) lorsque le point d'attache (13) est sur la butée (11), comportant les étapes suivantes :
a) envoyer à l'actionneur (5) une consigne de déplacement de son ensemble mobile (6) au-delà de la position correspondant à la mise sur la butée (11) du point d'attache (13),
b) mesurer la valeur d'au moins un couple constitué par l'élongation de l'ensemble mobile (6) et l'effort délivré par l'actionneur (5), au cours d'un déplacement dudit ensemble mobile,
c) calculer la valeur de l'élongation de l'ensemble mobile (6) qui correspond au contact du point d'attache (13) avec la butée (11) à partir de la mesure de l'effort délivré par l'actionneur (5) et du au moins un couple mesuré.
d) définir l'élongation à donner en utilisation à l'ensemble mobile (6) par son écart par rapport à la valeur calculée ci-dessus.

7. Méthode de commande selon la revendication 6 dans laquelle l'étape b) consiste à recueillir l'évolution en fonction du temps du couple constitué par l'élongation de l'ensemble mobile (6) et l'effort délivré par l'actionneur (5), lors du déplacement de l'ensemble mobile (6) consécutif à une consigne d'envoi dudit ensemble mobile au delà de la position correspondant à la mise sur butée du point d'attache (13) et dans laquelle l'étape c) consiste à détecter un point d'inflexion sur la courbe donnant l'évolution de l'effort délivré par l'actionneur (5) en fonction du temps.

8. Turbomachine équipée d'un équipement à géométrie variable (1) dont le positionnement est commandé par un dispositif selon l'une des revendications 1 à 5.

9. Calculateur d'une turbomachine dans lequel est implanté un module de calcul implémentant une méthode selon l'une des revendications 6 ou 7.

## Patentansprüche

1. Vorrichtung zum Steuern der Positionierung einer Einrichtung variabler Geometrie (1) eines Turbotriebwerks, die einen Rechner (2), ein Antriebselement (5) der variablen Geometrie, das durch den Rechner (2) gesteuert wird, und eine Kinematik (7) aufweist, wobei das Antriebselement (5) eine bewegliche Anordnung (6) aufweist, die mit einem Sensor (8) zum Messen seiner Elongation versehen ist, wobei die Kinematik (7) an einem ihrer Enden mit einem Einhängepunkt (12) der beweglichen Anordnung (6) und an dem anderen Ende mit einem Befestigungspunkt (13) der Einrichtung (1) verbunden ist, wobei der Befestigungspunkt (13) sich unter der Einwirkung des Antriebselements (5) entlang einer Strecke bewegt, die durch einen Anschlag (11) begrenzt wird, und die Kinematik (7) unter der Einwirkung des Antriebselements (5) elastisch verformbar ist, wenn der Befestigungspunkt (13) am Anschlag (11) ist,
**dadurch gekennzeichnet, dass** der Elongationssollwert, welcher der beweglichen Anordnung (6) vom Rechner (2) bereitgestellt wird, als eine Differenz gegenüber dem Wert der Elongation der beweglichen Anordnung (6) definiert ist, die dem Kontakt des Befestigungspunkts (13) mit dem Anschlag (11) entspricht.

2. Vorrichtung nach Anspruch 1, wobei der Rechner (2) den Wert der Elongation der beweglichen Anordnung (6) detektiert, die dem Kontakt des Befestigungspunkts (13) mit dem Anschlag (11) entspricht, indem er an das Antriebselement (5) wenigstens einen Sollwert der Bewegung seiner beweglichen Anordnung (6) über die Position hinaus sendet, die dem In-Anschlag-bringen des Befestigungspunkts (13) entspricht.

3. Vorrichtung nach Anspruch 2, die ferner ein Mittel zum Messen der vom Antriebselement (5) gelieferten Kraft aufweist, wobei der Rechner ausgebildet ist, um die Entwicklung des Moments, das von der Elongation der beweglichen Anordnung (6) und der vom Antriebselement (5) gelieferten Kraft gebildet ist, bei einer Bewegung der beweglichen Anordnung (6) als Reaktion auf einen Sollwert der Sendung der beweglichen Anordnung über die Position hinaus, die dem In-Anschlag-bringen des Befestigungspunkts (13) entspricht, in Abhängigkeit von der Zeit aufzunehmen.

4. Vorrichtung nach Anspruch 3, wobei der Rechner ausgebildet ist, um einen Inflexionspunkt auf der Kurve zu detektieren, welche die Entwicklung der vom Antriebselement (5) gelieferten Kraft in Abhängigkeit von der Zeit angibt.

5. Vorrichtung nach Anspruch 4, wobei der Rechner ausgebildet ist, um in seiner Logik zur Steuerung der Positionierung der Kinematik (7) die Elongation der beweglichen Anordnung (6), die dem Kontakt des Befestigungspunkts (13) mit dem Anschlag (11) entspricht, auf jene nachzustellen, die der vom Antriebselement (5) gelieferten Kraft am Inflexionspunkt entspricht.

6. Verfahren zum Steuern der Positionierung einer Einrichtung variabler Geometrie (1) eines Turbotriebwerks mit Hilfe einer Kinematik (7) durch die Elongation, die einer beweglichen Anordnung (6) eines Antriebselements (5) zu verleihen ist, wobei das Antriebselement mit einem Sensor (8) zum Messen der Elongation und einem Mittel zum Messen der vom Antriebselement (5) gelieferten Kraft versehen ist, wobei die Kinematik an einem ihrer Enden mit einem Einhängepunkt (12) des beweglichen Elements (6) und an dem anderen Ende mit einem Befestigungspunkt (13) der Einrichtung (1) verbunden ist, wobei der Befestigungspunkt (13) sich unter der Einwirkung des Antriebselements (5) entlang einer Strecke bewegt, die durch einen Anschlag (11) begrenzt wird, und die Kinematik (7) unter der Einwirkung des Antriebselements (5) elastisch verformbar ist, wenn der Befestigungspunkt (13) am Anschlag (11) ist, umfassend die folgenden Schritte:
a) Senden an das Antriebselement (5) eines Sollwerts der Bewegung seiner beweglichen Anordnung (6) über die Position hinaus, die dem In-Anschlag-bringen des Befestigungspunkts (13) am Anschlag (11) entspricht,
b) Messen des Wertes wenigstens eines Moments, das von der Elongation der beweglichen Anordnung (6) und der vom Antriebselement (5) gelieferten Kraft gebildet ist, im Laufe einer Bewegung der beweglichen Anordnung,
c) Berechnen des Wertes der Elongation der beweglichen Anordnung (6), die dem Kontakt des Befestigungspunkts (13) mit dem Anschlag (11) entspricht, ausgehend von der Messung der vom Antriebselement (5) gelieferten Kraft und wenigstens eines gemessenen Moments,
d) Definieren der Elongation, die der beweglichen Anordnung (6) bei Verwendung durch ihre Abweichung gegenüber dem oben berechneten Wert zu verleihen ist.

7. Steuerungsverfahren nach Anspruch 6, bei dem Schritt b) darin besteht, die Entwicklung des Moments, das von der Elongation der beweglichen Anordnung (6) und der vom Antriebselement (5) gelieferten Kraft gebildet ist, bei der Bewegung der beweglichen Anordnung (6) in Folge eines Sollwerts der Sendung der beweglichen Anordnung über die Position hinaus, die dem In-Anschlag-bringen des Befestigungspunkts (13) entspricht, in Abhängigkeit von der Zeit aufzunehmen, und bei dem Schritt c) darin besteht, einen Inflexionspunkt auf der Kurve zu detektieren, welche die Entwicklung der vom Antriebselement (5) gelieferten Kraft in Abhängigkeit von der Zeit angibt.

8. Turbotriebwerk, das mit einer Einrichtung variabler Geometrie (1) versehen ist, deren Positionierung durch eine Vorrichtung nach einem der Ansprüche 1 bis 5 gesteuert wird.

9. Rechner eines Turbotriebwerks, in dem ein Rechenmodul angeordnet ist, das ein Verfahren nach einem der Ansprüche 6 oder 7 implementiert.

## Claims

1. A device for controlling the positioning of an item of variable-geometry equipment (1) of a turbomachine, comprising a computer (2), an actuator (5) for actuating said variable geometry driven by the computer (2) and a kinematic system (7), said actuator (5) comprising a movable assembly (6) furnished with a sensor (8) for measuring its elongation, said kinematic system (7) being connected at one of its ends to a coupling point (12) of said movable assembly (6) and at the other end to an attachment point (13) of the item of equipment (1), the attachment point (13) moving under the action of the actuator (5) along a stroke limited by an abutment (11) and the kinematic system (7) being able to be deformed elastically under the action of the actuator (5) when the attachment point (13) is on the abutment (11), **characterized in that** the elongation setpoint supplied by the computer (2) to said movable assembly (6) is defined as a difference relative to the value of the elongation of the movable assembly (6) which corresponds to the contact of the attachment point (13) with the abutment (11).

2. The device as claimed in claim 1, wherein the computer (2) detects the value of elongation of the movable assembly (6) which corresponds to the contact of the attachment point (13) with the abutment (11) by sending to the actuator (5) at least one setpoint of movement of its movable assembly (6) beyond the position corresponding to the placement in abutment of the attachment point (13).

3. The device as claimed in claim 2, also comprising a means for measuring the force delivered by the actuator (5), wherein said computer is adapted to collect the change over time of the torque created by the elongation of the movable assembly (6) and the force delivered by the actuator (5) during a movement of the movable assembly (6) in response to a setpoint transmitted from said movable assembly beyond the position corresponding to the placement in abutment of the attachment point (13).

4. The device as claimed in claim 3, wherein said computer is adapted to detect an inflection point on the curve giving the change in the force delivered by the actuator (5) over time.

5. The device as claimed in claim 4, wherein said computer is adapted to reset, in its control logic for controlling the positioning of the kinematic system (7), the elongation of the movable assembly (6) corresponding to the contact of the attachment point (13) with the abutment (11) on that corresponding to the force delivered by the actuator (5) to said inflection point.

6. A method for controlling the positioning, by means of a kinematic system (7), of an item of variable-geometry equipment (1) of a turbomachine by the elongation to be given to a movable assembly (6) of an actuator (5), said actuator being furnished with a sensor (8) for measuring said elongation and with a means for measuring the force delivered by the actuator (5), said kinematic system being connected at one of its ends to a coupling point (12) of said movable assembly (6) and at the other end to an attachment point (13) of said item of equipment (1), the attachment point (13) moving under the action of the actuator (5) along a stroke limited by an abutment (11) and the kinematic system (7) being able to be deformed elastically under the action of the actuator (5) when the attachment point (13) is on the abutment (11), comprising the following steps:
a) sending to the actuator (5) a setpoint of movement of its movable assembly (6) beyond the position corresponding to the placement in abutment of the attachment point (13),
b) measuring the value of at least one torque formed by the elongation of the movable assembly (6) and the force delivered by the actuator (5), during a movement of said movable assembly,
c) computing the value of the elongation of the movable assembly (6) which corresponds to the contact of the attachment point (13) with the abutment (11) based on the measurement of the force delivered by the actuator (5) and on the at least one measured torque,
d) defining the elongation to be given in use to the movable assembly (6) by its difference relative to the value computed above.

7. The control method as claimed in claim 6, wherein step b) consists in collecting the change over time in the torque formed by the elongation of the movable assembly (6) and the force delivered by the actuator (5), during the movement of the movable assembly (6) following a transmitted setpoint from said movable assembly beyond the position corresponding to the placement in abutment of the attachment point (13) and wherein step c) consists in detecting an inflection point on the curve giving the change in the force delivered by the actuator (5) over time.

8. A turbomachine fitted with an item of variable-geometry equipment (1) of which the positioning is controlled by a device as claimed in one of claims 1 to 5.

9. A computer of a turbomachine in which a computing module is installed implementing a method as claimed in one of claims 6 or 7.
